**Europäisches Patentamt**

(19) **European Patent Office**

**Office européen des brevets**

(11) Publication number : **0 472 596 B1**

(12) **EUROPEAN PATENT SPECIFICATION**

(45) Date of publication of patent specification :
13.01.93 Bulletin 93/02

(51) Int. Cl.⁵ : **B01D 67/00,** B01D 71/68,
C08J 7/12

(21) Application number : **90907754.7**

(22) Date of filing : **30.04.90**

(86) International application number :
**PCT/US90/02383**

(87) International publication number :
**WO 90/14149 29.11.90 Gazette 90/27**

(54) **SURFACE FLUORINATION OF MEMBRANES.**

(30) Priority : **18.05.89 US 353575**

(43) Date of publication of application :
**04.03.92 Bulletin 92/10**

(45) Publication of the grant of the patent :
**13.01.93 Bulletin 93/02**

(84) Designated Contracting States :
**AT BE CH DE DK ES FR GB IT LI LU NL SE**

(56) References cited :
**EP-A- 0 132 407
GB-A- 1 024 996
US-A- 4 296 151
US-A- 4 491 653
US-A- 4 828 585
Patent Abstracts of Japan, vol. 9, no. 45
(C-268) (1768), 26 February 1985
Patent abstracts of Japan, vol. 12, no. 248
(C-511)(3095), 13 July 1988
Patent Abstracts of Japan, vol. 13, no. 461
(C-645) (3809), 18 October 1989**

(56) References cited :
**Journal of Membrane Science, vol. 36, no. 1 +
index, March 1988, Elsevier Science
Publishers B.V., (Amsterdam, NL), J. Wolffet
al.: "Tailoring of ultrafiltration membranes by
plasma treatment and their application for the
desalination and concentration ofwater-solu-
ble organic substances", pp. 207-214
Patent Abstracts of Japan, vol. 9, no. 222
(C-302)(1945), 9 September 1985**

(73) Proprietor : **ALLIED-SIGNAL INC. (a Delaware
corp.)
Law Department P.O. Box 2245R
Morristown, New Jersey 07962-2245 (US)**

(72) Inventor : **WHITE, Lloyd, Steven
5070 Summer Day Lane
Columbia, Maryland 21044 (US)**
Inventor : **TAYLOR, Donald, Robert
100 Meadowbrook Road
Randolph, New Jersey 07869 (US)**

(74) Representative : **Brock, Peter William et al
URQUHART-DYKES & LORD 91 Wimpole
Street
London W1M 8AH (GB)**

## Description

The invention relates to improving the rate at which water can be transferred through a membrane, as in filtration or reverse osmosis. More particularly, the invention relates to the treatment of polysulfone membranes used for ultrafiltration.

It has been recognized that while many polymers are hydrophobic, formation of a hydrophilic surface on such polymers would be beneficial where aqueous liquids are to be processed through a polymer membrane. The art is discussed in U.S. patent 4,618,533, which discloses a method of depositing a hydrophilic coating on a membrane by in situ polymerization.

The surface fluorination of various polymers is also known. Dixon et al. in U.S. patent 4,020,223 disclose treatment of polyolefin and polyacrylonitrile fibers with fluorine in the presence of small amounts of oxygen to increase the amount of fluorination. The patentees state that improved water absorption results from the treatment. The purpose of the treatment was related to improvement in the performance of fabrics made from such treated fibers.

Fluorination of various polymers, particularly hydrocarbon polymers, in the absence of oxygen but using a cold plasma was disclosed by Anand et al. in U.S. patent 4,264,750.

Functionalized polymers containing pendant ester, carboxylic acid, acid halide, or acid anhydride groups were fluorinated by fluorine-inert gas mixtures by Lagow as shown in U.S. patent 4,076,916.

Boultinghouse, in U.S. patent 4,296,151 discloses the fluorination of plastic articles with fluorine in an inert gas to make the surfaces more wettable with water and thus to be receptive to various coatings, inks, paints, etc. The polymers were based on hydrocarbons such as olefins, dienes, and vinyl-substituted aromatics.

More recently, McGinniss et al. in U.S. patent 4,491,653 examined the surface-fluorination of polymers and determined that the oxygen content should be restricted and that partial fluorination of the surface to produce -CHF- groups was desirable. Various types of polymers were suggested as being benefitted by such fluorination, including polysulfone, although no working example was provided. Also, US-A-4828585 discloses a technique whereby the selectivity of a gas membrane could be increased with little decrease in permeability. The membrane surface was treated with either fluorine or a mixture of fluorine and sulfur dioxide, with an optional inert diluent gas.

Polysulfone membranes as produced are hydrophobic and will pass very little water even under significant pressure differentials because the pores are so small that the capillary pressures are too great to permit water to be forced through them. It has been necessary to preheat such membranes in order to obtain a high flux rate through the membranes. For example, by metallation and subsequent carboxylation (see Guirer et al., Abstracts of Paper - Third Chemical Congress of North America Part I, Toronto, Canada, June 5-10, 1988 I&EC #63). The applicant has found an improved method for providing a more hydrophilic surface and increasing the rate at which water can be passed through such membranes.

This invention provides a process for improving the properties of a membrane by treatment with elemental fluorine, in which a porous filtration membrane is exposed to elemental fluorine in admixture with an inert gas in the substantial absence of oxygen, thereby improving the rate at which water can be transferred through said membrane. Such exposure will generally be carried out at temperatures in the range of -45° to 70°C and with a partial pressure of fluorine of 0.01 to 10 KPa, preferably in the range of 0.2 to 2.0 KPa. The preferred inert gas is helium.

Membranes have been extensively investigated in recent years and have been used for many separations. Polysulfones have been used widely for their chemical resistance.

They may serve as a base for thin films which carry out the actual process of ultrafiltration or they may serve as the membrane. Polysulfone is a generic name for a family of high molecular weight polymers containing sulfone groups and aromatic nuclei in the main chain. Of particular commercial importance is the condensation product of bisphenol A and dichlorodiphenyl sulfone. Since it has considerable resistance to temperature and hydrolysis, it is employed in various uses where these properties are useful, such as ultrafiltration in the food industry or as a support in preparation of desalination membranes. Of particular interest to the present inventors is its application as a porous support for a thin membrane deposited on it or as a membrane itself. It is relatively hydrophobic so that its use where it is exposed to an aqueous fluid must account for this property. As will be seen in the examples below, even with substantial pressures applied a commercial polysulfone membrane passed only a very small amount of water. However, if pretreated with a methanol solution or certain surfactant solutions the flow of water is substantially increased. Such a treatment must be considered a temporary expedient since methanol or surfactants would be removed by water passing through the membrane so that unless continuously in contact with water the increased rate would not be maintained.

In addition to the bisphenol A sulfone polymers related sulfone polymers such as polyphenyl sulfones, polyether sulfones, and poly aryl ether sulfones may be subjected to the treatment of the invention. When polysul-

2

fones are used to make reverse osmosis or ultrafiltration membranes, they are either solution cast and then precipitated in a non-solvent or melt extruded in the presence of pore forming materials. Other polymers that are commonly employed in the manufacture of synthetic membranes are polyacrylics, polyamides, and polyacrylonitrile. These materials would benefit also from fluorination according to invention.

Fluorine Treatment

In view of the aggressive nature of fluorine, it is usually diluted with an inert gas, preferably helium. It has been 0.01 to 10 kPa, preferably 0.2 to 2 kPa. The temperature used in the fluorination treatment may be from -45°C to +70°C, with ambient temperature generally preferred. The reaction may be initiated by ultraviolet radiation as shown in the examples below, but its use is not considered essential. The fluorination process is rapid and exposure time is believed less important than the partial pressure of the fluorine. Typical exposure times would be up to two hours, with much shorter times being preferred.

The fluorination treatment of the invention is independent of the membrane configuration. Flat sheet membranes are available in a range of pore sizes, depending on whether they are used for hyperfiltration, ultrafiltration, microfiltration, or particle filtration. Fluorination of the finished membrane products by the process of the invention gives beneficial properties such as hydrophilicity to the membrane surface without damage to the bulk membrane properties. When these membranes are further assembled into plate and frame, spiral wound, or hollow fiber units, the benefits of the treatment will still be present. The utility of the invention in treating preformed structures will be apparent. The process may be carried out either batchwise or in a continuous manner, depending upon the type and amount of membrane being treated.

Example 1

Comparative

A Type A polysulfone ultrafiltration membrane made by UOP Fluid Systems was selected for comparison testing. This asymmetric membrane is made by depositing polysulfone as a viscous solution on a porous non-woven polyester backing. The thin polysulfone membrane has a nominal pore size of 0.01 $\mu$m.

A 25.4 mm x 76.2 mm sample of the membrane is placed in a closed loop test system which recirculates both the fluid which passes through the membrane (permeate) and the fluid which does not pass through the membrane (retentate).

As prepared, the membrane was capable of passing almost no water (about 61.12 l/m$^2$/day) even when the pressure differential across the membrane was 689.5 kPa.

When a sample of the membrane is pretreated by immersion in a 50% aqueous methanol solution a water flux of about 4074 l/m$^2$/day was obtained with a differential pressure of 689.5 kPa.

Example 2

Samples of the membrane of Example 1 were fluorinated by exposure to a flowing mixture of elemental fluorine in helium while irradiated with ultraviolet light. The membrane samples were supported on a Monel sheet mounted in a 101.6 mm o.d. Monel cylinder 152.4 mm long with a top having a 50.8 mm square quartz window coated with 0.25 mm of fluorinated ethylene-propylene polymer film. The ultraviolet light generated by a 750 watt mercury arc lamp passes through the quartz window onto the membrane sample undergoing fluorination.

A predetermined mixture of helium and 0.05 vol % fluorine is passed through the Monel cylinder continuously. The fluorine used was 97% technical grade material supplied by Air Products and Chemicals Inc. The helium gas was 99.9% pure and was scrubbed of any trace oxygen by Oxisorb cartridges supplied by Matheson Gas Products.

The conditions of fluorination were about 20°C and 101.3 kPa.

A sample of the fluorinated membrane was tested in the equipment of Example 1 and a water flux of 3300 l/m$^2$/day was obtained at a pressure differential of 689.5 kPa. The increase in water flux was comparable to that obtained with methanol treatment. The fluorine treatment, however, is considered durable while the methanol would be expected to be removed in use so that should the membrane be dried, it would lose much of its ability to pass water and require re-conditioning with methanol.

Example 3

Samples of the membrane of Example 1 were treated with varying amounts of fluorine in a helium carrier as described in Example 2. The contact angle of water on membrane was determined by observation of a water droplet freshly deposited on the membrane surface. The results of these tests are given in the following table.

## Table A

| Vol % of Fluorine in Helium | Exposure, minutes | Ultraviolet Exposure | Water Contact Angle |
|---|---|---|---|
| untreated | - | - | 62 |
| 0 | 15 | yes | 58 |
| 0 | 30 | yes | 55 |
| 0.025 | 15 | yes | 51 |
| 0.025 | 30 | yes | 48 |
| 0.05 | 30 | no | 37 |
| 0.05 | 30 | no | 33 |
| 0.05 | 30 | yes | 30 |
| 2 | 15 | no | 0 |
| 2 | 120 | no | 0 |

It will be seen that the contact angle decreased with increased severity of the fluorine treatment. At a concentration of 2 volume percent fluorine complete wetting was observed. However, deterioration of the surface due to fluorine attack makes the lower concentrations preferred.

Example 4

Polysulfone membranes of Example 1 were compared with various treatments as described in the previous examples, with the results of water flux testing given in the following table.

## Table B
### Water Flux ($1/m^2$-day)

| Pressure Differential kPa | Untreated Polysulfone | Treated with 50% MeOH | Exposed to He only + UV | Exposed to 0.05% $F_2$ in He for 30 min. + UV |
|---|---|---|---|---|
| 690 | 61.1 | 4237 | 61.1 | 3300 |
| 0 | 0 | 0 | 0 | 0 |
| 172 | 0 | 1426 | 0 | 1263 |
| 345 | 28.5 | 2648 | 36.7 | 2241 |
| 690 | 44.8 | 4319 | 81.5 | 3422 |

## Claims

1. A process for improving the properties of a membrane by treatment with elemental fluorine, characterised in that a porous filtration membrane is exposed to elemental fluorine in admixture with an inert gas in the substantial absence of oxygen, thereby improving the rate at which water can be transferred through said membrane.

2. The process of Claim 1 wherein said membrane comprises a polysulfone.

3. The process of Claim 1 wherein said membrane is an asymmetric membrane which is the condensation product of bisphenol A and dichlorodiphenyl sulfone on a support.

4. The process of Claim 1 wherein said membrane comprises a polymer chosen from the group consisting of polyacrylics, polyamides, and polyacrylonitrile.

5. The process of Claim 1 wherein the exposure of said membrane to fluorine is carried out at -45° to 70°C and at atmospheric or sub-atmospheric pressure.

6. The process of Claim 1 wherein the fluorine partial pressure is 0.01 to 10 kPa.

7. The process of Claim 1 wherein the inert gas is helium.

8. The process of Claim 1 wherein said membrane is exposed to fluorine in the presence of ultraviolet radiation.

9. A membrane treated by exposing a porous filtration membrane to elemental fluorine in admixture with an inert gas in the substantial absence of oxygen and thereby improving the rate at which water can be transferred through said membrane.

10. A filtration process comprising transferring water through a membrane treated by exposing a porous filtration membrane to elemental fluorine in admixture with an inert gas in the substantial absence of oxygen.

## Patentansprüche

1. Verfahren zum Verbessern der Eigenschaften einer Membrane durch Behandlung mit elementarem Fluor, dadurch gekennzeichnet, daß eine poröse Filtermembrane elementarem Fluor in Mischung mit einem Inertgas, im wesentlichen in Abwesenheit von Sauerstoff, ausgesetzt wird, wodurch die Rate verbessert wird, mit der Wasser durch die Membrane hindurch übertragen werden kann.

2. Verfahren nach Anspruch 1, bei dem die Membrane ein Polysulfon aufweist.

3. Verfahren nach Anspruch 1, bei dem die Membrane eine asymmetrische Membrane ist, die ein Kondensationsprodukt von Bisphenol A und Dichlor-Diphenylsulfon auf einem Träger ist.

4. Verfahren nach Anspruch 1, bei dem die Membrane ein aus der aus Polyacrylen, Polyamiden und Polyacrylnitril bestehenden Gruppe ausgewähltes Polymer aufweist.

5. Verfahren nach Anspruch 1, bei dem das Aussetzen der Membrane an Fluor bei -45° bis 70°C und bei Atmorsphären- oder Subatmosphärendruck durchgeführt wird.

6. Verfahren nach Anspruch 1, bei dem der Partialdruck von Fluor 0,01 bis 10 kPa beträgt.

7. Verfahren nach Anspruch 1, bei dem das Inertgas Helium ist.

8. Verfahren nach Anspruch 1, bei dem die Membrane dem Fluor in Gegenwart ultravioletter Strahlung ausgesetzt wird.

9. Membrane, welche durch Aussetzen einer porösen Filtrationsmembrane elementarem Fluor in Mischung mit einem Inertgas, im wesentlichen in Abwesenheit von Sauerstoff, behandelt ist und dadurch die Rate verbessert, mit der Wasser durch die Membrane hindurch übertragen werden kann.

10. Filtrationsverfahren, das die Übertragung von Wasser durch eine Membrane umfaßt, welche durch Aussetzen einer porösen Filtrationsmembrane elementarem Fluor in Mischung mit einem Inertgas, im wesentlichen in Abwesenheit von Sauerstoff, behandelt ist.


**Revendications**

1. Procédé pour améliorer les propriétés d'une membrane par traitement avec du fluor élémentaire, caractérisé en ce qu'une membrane de filtration poreuse est exposée à du fluor élémentaire dans un mélange avec un gaz inerte pratiquement en absence d'oxygène, d'où l'amélioration de la vitesse à laquelle l'eau peut être transférée à travers ladite membrane.

2. Procédé selon la revendication 1, dans lequel ladite membrane comprend un polysulfone.

3. Procédé selon la revendication 1, dans lequel ladite membrane est une membrane asymétrique qui est le produit de la condensation du bisphénol A et du dichlorodiphénylsulfone sur un support.

4. Procédé selon la revendication 1, dans lequel ladite membrane comprend un polymère choisi dans le groupe constitué des polyacryliques, polyamides, et du polyacrylonitrile.

5. Procédé selon la revendication 1, dans lequel l'ex:position de ladite membrane au fluor est exécutée entre -45° et 70° C et à la pression atmosphérique ou sous-atmosphérique.

6. Procédé selon la revendication 1, dans lequel la pression partielle du fluor est comprise entre 0,01 et 10 kPa.

7. Procédé selon la revendication 1, dans lequel le gaz inerte est l'hélium.

8. Procédé selon la revendication 1, dans lequel ladite membrane est exposée au fluor en présence d'un rayonnement ultraviolet.

9. Membrane traitée en exposant une membrane de filtration poreuse à du fluor élémentaire dans un mélange avec un gaz inerte pratiquement en l'absence d'oxygène, d'où l'amélioration de la vitesse à laquelle l'eau peut être transférée à travers ladite membrane.

10. Procédé de filtration comprenant le transfert de l'eau à travers une membrane traitée en exposant une membrane de filtration poreuse à du fluor élémentaire en mélange avec un gaz inerte pratiquement en l'absence d'oxygène.